# EUROPEAN PATENT SPECIFICATION

(11) **EP 0 899 928 B1**
(45) Date of publication and mention of the grant of the patent: **03.08.2005**
(21) Application number: 98306965.9
(22) Date of filing: 28.08.1998
(51) Int. Cl.: H04M 1/72, H04Q 7/38

(54) **Communication method in cordless telephone system**
Kommunikationsverfahren in einem schnurlosen Telefonsystem
Méthode de communication dans un système de téléphonie sans fil

(30) Priority: 28.08.1997 KR 4190297
(43) Date of publication of application: 03.03.1999
(73) Proprietor: SAMSUNG ELECTRONICS CO., LTD., Suwon-City, Kyungki-do (KR)
(72) Inventor: Kim, Kyung-Wook, Kumi-shi, Kyongsangbuk-do (KR)
(74) Representative: Boakes, Jason Carrington

(56) References cited:
- GB-A- 2 166 622
- GB-A- 2 277 849
- US-A- 4 768 218
- US-A- 4 882 766
- US-A- 5 218 628
- US-A- 5 592 534

## Description

The present invention relates to a cordless telephone system, and in particular, to a communication method in a cordless telephone system.

Many forms of wireless communication networks are known. For example US 4882766 discloses how a terminal station may communicate via a plurality of radio base stations. Also GB 2277849 which discloses how a mobile can operate in a radio communication network in which there are a plurality of base stations. Another type of wireless communication network is the cordless telephone system.

A typical cordless telephone system is composed of a base unit connected to a central office line and a portable unit for communicating with the base unit or with a different wired/cordless telephone while a user moves around within a predetermined area. Although one portable unit is generally registered with a base unit, the number of registered portable units per base unit may be increased. That is, in addition to the normal portable unit, another portable unit is purchased and registered with the base unit. In this manner, two or more portable units may be registered with a base unit. Use of a portable unit registered with a base unit allows a user to communicate conveniently without needing to move to the location of the base unit.

More homes or offices have recently started to use two or more telephones by connecting them in parallel to a single telephone line or to different telephone lines. In the former case, the telephones are assigned an identical phone number so that a call is allowed to one subscriber only, whereas in the latter case, each telephone line is assigned its own phone number.

When using a cordless telephone system in such cases, one or more portable units are registered with a base unit and a call with a portable unit is performed via the base unit. Therefore, a user cannot make a call with a portable unit when the base unit and another portable unit are occupied on a call, and thus suffers the inconvenience of having to use a base unit of another cordless telephone system or a portable unit registered with that other base unit.

It is an aim of embodiments of the present invention to at least partly mitigate the above-mentioned problems.

An aim of embodiments of the present invention is to provide a communication method in a cordless telephone system having a base unit and at least two portable units registered with the base unit, which allows communication even when the base unit is busy.

According to a first aspect of the present invention there is provided a method of operating a base unit in a cordless telephone system having a base unit with which a first plurality of portable units are registered, including at least one portable unit which is registered with a plurality of base units, the method comprising sending a busy signal to the said at least one portable unit, upon detection of a call request signal or an off-hook signal in the base unit, and performing a call.

Preferably the method further comprises upon detecting said off-hook signal or a call request signal in the base unit, reading the ID of at least one portable unit from a memory in said base unit; and
sending said busy signal to at least one corresponding portable unit.

The first plurality of portable units may comprise a second plurality of portable units which are registered with a plurality of base units and the method comprises sending the busy signal to each of the second plurality of portable units. Accordingly, the method may further comprise sending a call termination signal to each of the second plurality of portable units when the call is terminated in the base unit. The busy signal and/or the call termination signal may be sent to each of the first plurality of portable units.

Alternatively, the first plurality of portable units may comprise a second plurality of portable units which are registered with a plurality of base units, the call request signal be received from one of the second plurality of portable units and the method comprise sending the busy signal to each of the rest of the second plurality of portable units and performing the call with the said one of the second plurality of portable units. Accordingly, the method may further comprise sending a call termination signal to each of the rest of the second plurality of portable units when the call is terminated in the base unit. The busy signal and/or the call termination signal may be sent to each of the first plurality of portable units except for the said one of the second plurality of portable units. According to a second aspect of the present invention there is provided a method of operating a portable unit in a cordless telephone system, in which the portable unit is registered with a plurality of base units comprising:
receiving from the plurality of base units with which the portable unit is registered respective control signals indicative of the communication state of the base units;
maintaining a table of the states of the said plurality of base units derived from the control signals;
selecting an idle base unit on the basis of the table of states; and
performing a call via the idle base unit.

The table of states may be maintained by setting a base unit to a busy state in the table upon receipt of a busy signal from the base unit and setting the base unit to an idle state in the table upon receipt of a call termination signal from the base unit.

According to a third aspect of the present invention there is provided a base unit for use in a cordless telephone system in which a first plurality of portable units may be registered, including at least one portable unit which is registered with a plurality of base units, the base unit comprising control means for sending a busy signal to the said at least one portable unit, upon detection of a call request signal or an off-hook signal in the base unit, and for performing a call.

According to a fourth aspect of the present invention there is provided a portable unit for use in a cordless telephone system which is adapted to be registered with a plurality of base units and comprises:
means for receiving from the plurality of base units with which the portable unit is registered respective control signals indicative of the communication state of the base units; and
control means for maintaining a table of the states of the said plurality of base units derived from the control signals, selecting an idle base unit on the basis of the table of states and performing a call via the idle base unit.

The present invention will now be described by way of example with reference to the accompanying drawings in which:
FIG. 1 illustrates portable units registered with two cordless telephone base units according to the present invention;
FIG. 2 is a block diagram of a base unit to which the present invention is applied;
FIG. 3 is a block diagram of a portable unit to which the present invention is applied;
FIG. 4 is a flowchart of the control operation of the base unit; and

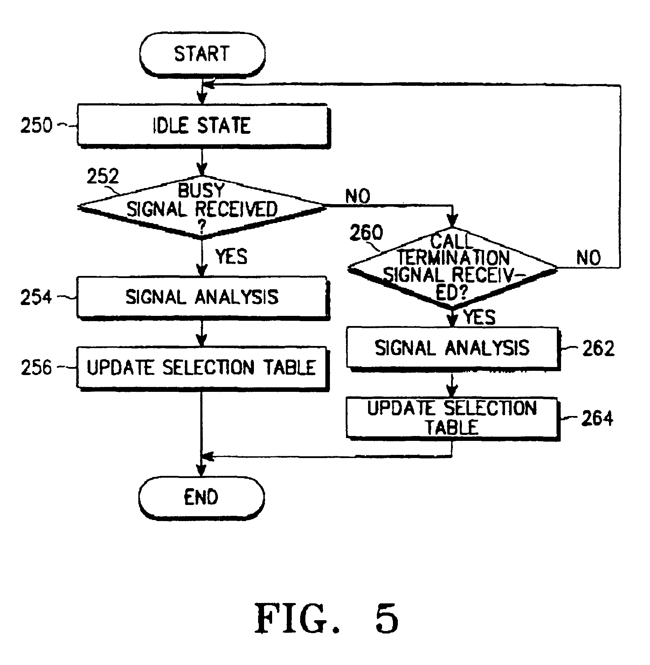

FIG. 5 is a flowchart of the control operation of the portable unit.

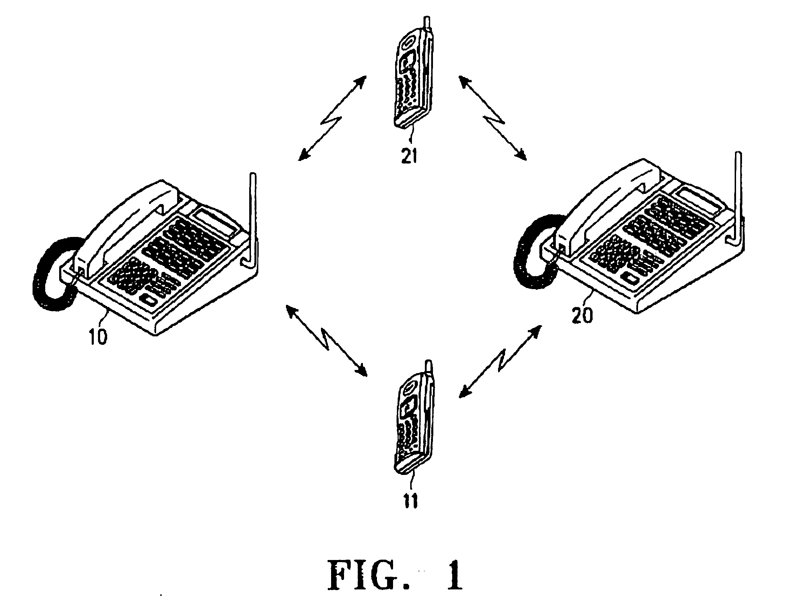

FIG. 1 illustrates base units and portable units in use in a cordless telephone system according to the present invention. Portable units 11 and 21 are both registered with base units 10 and 20 connected to a central office line through different telephone lines, so that the portable units 11 and 21 can conduct communications via both the base units 11 and 21. This is applicable to DECT (Digital European Cordless Telephone) as well as general cordless telephone systems.

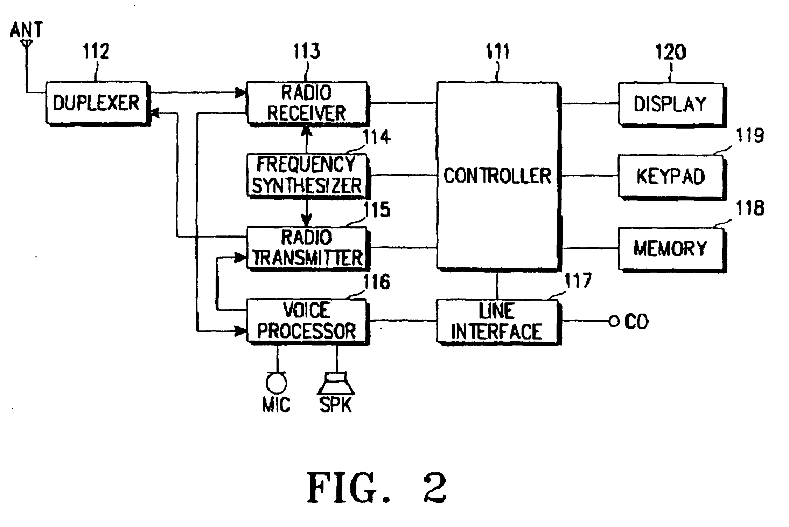

As illustrated in FIG. 2, a controller 111 controls the operations of the base unit, and particularly, causes a busy signal to be sent to all the portable units registered with the base unit upon receipt of a request for use of the base unit. A duplexer 112 filters a predetermined frequency bank in a radio signal received via an antenna ANT and outputs a radio signal received from a radio transmitter 115 via the antenna ANT. A radio receiver 113 outputs the radio signal received from the duplexer 112 in a local oscillation frequency received from a frequency synthesiser 114 to a voice processor 116 or the controller 111 under the control of the controller 111.

The frequency synthesiser 114 generates the local oscillation frequency under the control of the base unit controller 111. The radio transmitter 115 outputs data received from the controller 111 or the voice processor 115 in the local oscillation frequency received from the frequent synthesiser 114 to the duplexer 112 under the control of the controller 111. The voice processor 116 converts the data received from the radio receiver 113 to an electrical voice signal through decoding and outputs the electrical voice signal to a speaker SPK under the control of the controller 111. The voice processor 116 also encodes an electrical voice signal received via a microphone MIC and outputs the encoded data to the radio transmitter 115 under the control of the controller 111. A line interface 117 connects a user handset (not shown) to a central office line in an off-hook state and outputs an off-hook signal to the controller 111. In the case of a call through the line interface 117, the voice processor 116 performs neither an encoding nor a decoding under the control of the base unit controller 111.

A memory 118 includes a program memory (not shown) for storing programs necessary for operating the base unit and a data memory (not shown) for storing data generated during execution of the programs. A keypad 119 has a key matrix structure (not shown), for generating a key input signal corresponding to a user key input and outputting the key input signal to the controller 111. A display 120 displays the operation and state of the base unit under the control of the controller 111.

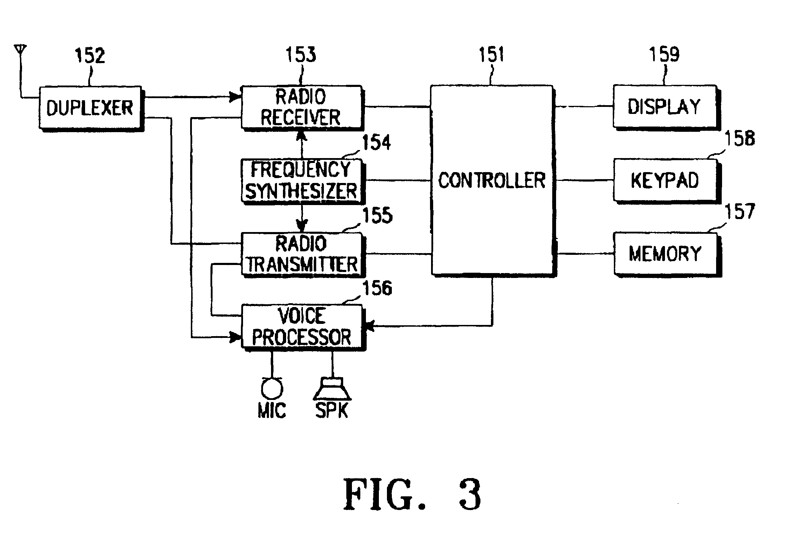

As shown in FIG. 3, a controller 151 controls the entire operations of the portable unit. Particularly when a primary base unit is busy and the portable unit is to initiate a call, the controller 151 switches the portable unit to a secondary base unit with which it is registered. A duplexer 152, a radio receiver 153, a frequency synthesiser 154, a radio transmitter 155 and a voice processor 156 perform the same operations as those of their respective counterparts in the base unit of FIG. 2. A memory 157 stores programs necessary for operating the portable unit and data generated during a control operation. A keypad 158 and a display 159 are operated in the same manner as their respective counterparts in the base unit.

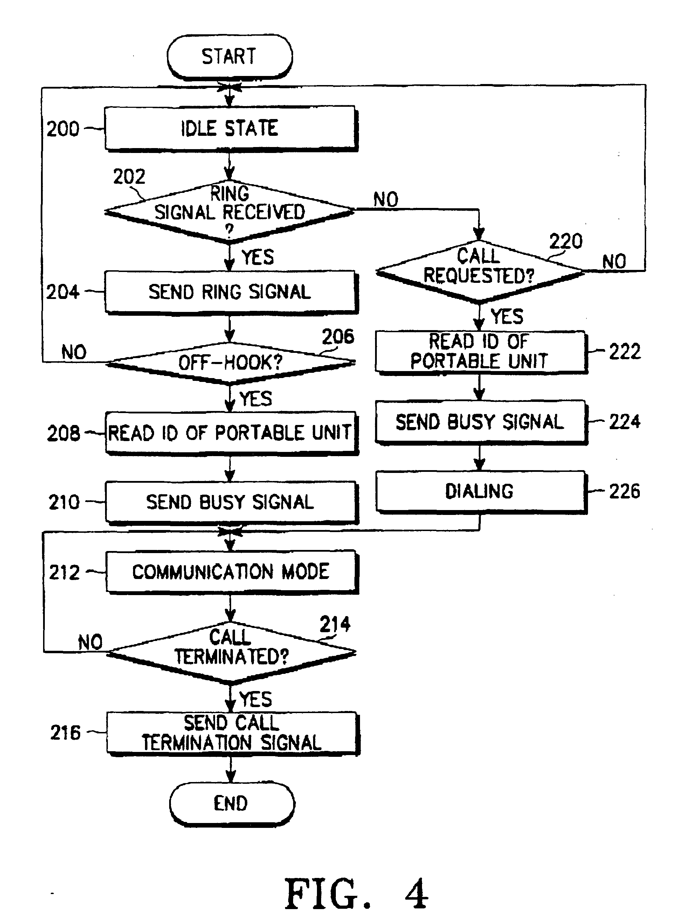

The call control operation in the base unit will be described below referring to FIGs. 1 to 4. The controller 111 is set to an idle state in step 200 and determines whether a ring signal is received via the line interface 117 in step 202. Upon receipt of the ring signal, the controller 111 proceeds to step 204. In the absence of the ring signal, the controller 111 determines whether the handset of the base unit goes off-hook or a call request signal is received from the portable unit 11 or 21, in step 220. In either case, the controller 111 goes to step 222, and in the absence of a call request from the base unit and the portable units 11 and 21, it returns to step 200. Meanwhile, the controller 111 sends the ring signal to the portable units 11 and 21 via the radio transmitter 115, the frequency synthesiser 114 and the speaker SPK, in step 204. In step 206, the controller 111 determines whether a portable unit or the base unit handset is hooked off.

Upon detection of an off-hook signal from the base unit, the controller 111 reads the IDs (identifications) of the portable units 11 and 21 from the memory 118, whereas upon detection of an off-hook signal from the portable unit 11 or 21, it reads the ID of the other portable unit from the memory 118, in step 208. In step 210, the controller 111 controls the radio transmitter 115 and the frequency synthesiser 114 to send a busy signal as a radio signal to the corresponding portable units, and in step 212, the controller 111 enters a communication mode. The controller 111 determines whether a call termination signal is received during the communication mode, in step 214. Upon receipt of the call termination signal, the controller 111 sends a call termination signal to the portable units in step 216, and ends the control procedure.

Meanwhile, upon receipt of a call request signal from the portable unit 11 or 21 in step 220, the controller 111 reads the ID of the other portable unit from the memory 118 in step 222. Although the controller 111 can transmit user request signals for use of various high-level functions besides a call request signal from a portable unit, the call request signal is taken here as an example for clarity of description. On the other hand, if the base unit handset is hooked off in step 220, the controller 111 reads the IDs of all the portable units 11 and 21 registered with the base unit, in step 222. Then, the controller 111 sends a busy signal to the portable units by controlling the frequency synthesiser 114 and the radio transmitter 115, in step 224. The controller 111 generates a DTMF (Dual Tone Multi-Frequency) signal in response to a dial signal received from the radio receiver 113 or a key input signal received from the keypad 119, and outputs the DTMF signal to the line interface 117, in step 226.

In summary, upon receipt of a ring signal, the base unit sends the ring signal to the portable units 11 and 21 and outputs a ring tone via the speaker SPK of the base unit. When the base unit 10 goes off-hook, the base unit 10 sends a busy message to the portable units 11 and 21. On the other hand, if the portable unit 21 is hooked off, the base unit 10 sends a busy signal to the portable unit 11. Upon receipt of a call request signal from the portable unit 21 in the absence of a ring signal, the base unit 10 sends a busy signal to the portable unit 11. If the call request signal is received from the portable unit 11, the base unit 10 sends the busy signal to the portable unit 21. In addition, when a user hooks off the base unit 10 to initiate a call, the base unit 10 sends a busy signal to the portable units 11 and 21.

There now follows a description of the control operation of a portable unit to receive a busy signal or a call termination signal from a base unit. The controller 151 is set to an idle state in step 250, and determines whether a busy signal is received via the radio receiver 153 in step 252. Upon receipt of the busy signal, the procedure goes to step 254, and otherwise, it goes to step 260. The controller 151 determines whether a call termination signal is received via the radio receiver 153, in step 260. Upon receipt of the call termination signal, the controller 151 goes to step 262, and otherwise, it returns to step 250. Meanwhile, the controller 151 analyses the received busy signal in step 254, and stores the busy signal in a selection table in step 256. Here, the busy signal analysis indicates detecting the ID of a base unit which sent the busy signal. An example of a selection table is shown in Table 1.

**(Table 1)**

| | Primary Base Unit | Secondary Base Unit |
|---|---|---|
| Communication State: | 1 | 0 |

Each portable unit has a different primary base unit. That is, the base units 10 and 20 are designated as primary and secondary base units, respectively, for the portable unit 11 of FIG. 1. On the other hand, the base units 20 and 10 act as primary and secondary base units, respectively, for the portable unit 21. When a base unit is set to 1 in Table 1, it implies that the portable unit received a busy signal from the base unit. When the base unit is reset to 0, it implies that the portable unit did not receive a busy signal from the base unit. Therefore, the portable unit sends a calling signal to the primary base unit when the primary base unit is not busy.

Meanwhile, the controller 151 analyses the received call termination signal in step 262 and then goes to step 264. Here, signal analysis indicates detection of the ID of the base unit which sent the call termination signal. The controller 151 resets the communication state of the base unit to 0 representing that the base unit is idle in the selection table according to the analysis and ends the procedure. The base unit switching method for a portable unit can be applied to DECT.

As described above, when a base unit is busy, a portable unit is automatically switched to another base unit in a cordless telephone system, so that a call can be conveniently made without a user key manipulation.

## Claims

1. A method of operating a base unit in a cordless telephone system having a base unit with which a first plurality of portable units are registered, including at least one portable unit which is registered with a plurality of base units, the method comprising sending a busy signal to the said at least one portable unit, upon detection of a call request signal or an off-hook signal in the base unit, and performing a call.

2. A method according to claim 1 further comprising:
upon detecting said off-hook signal or call request signal in the base unit, reading the ID of at least one portable unit from a memory in said base unit; and
sending said busy signal to at least one corresponding portable unit.

3. A method according to claim 1 in which the first plurality of portable units comprises a second plurality of portable units which are registered with a plurality of base units and the method comprises sending the busy signal to each of the second plurality of portable units.

4. A method according to claim 3 further comprising sending a call termination signal to each of the second plurality of portable units when the call is terminated in the base unit.

5. A method according to claim 3 or claim 4 in which the busy signal and/or the call termination signal is or are sent to each of the first plurality of portable units.

6. A method according to claim 1 in which the first plurality of portable units comprises a second plurality of portable units which are registered with a plurality of base units, the call request signal is received from one of the second plurality of portable units and the method comprises sending the busy signal to each of the rest of the second plurality of portable units and performing the call with the said one of the second plurality of portable units.

7. A method according to claim 6 further comprising sending a call termination signal to each of the rest of the second plurality of portable units when the call is terminated in the base unit.

8. A method according to claim 6 or claim 7 in which the busy signal and/or the call termination signal is or are sent to each of the first plurality of portable units except for the said one of the second plurality of portable units.

9. A method of operating a portable unit in a cordless telephone system, in which the portable unit is registered with a plurality of base units comprising:
receiving from the plurality of base units with which the portable unit is registered respective control signals indicative of the communication state of the base units;
maintaining a table of the states of the said plurality of base units derived from the control signals;
selecting an idle base unit on the basis of the table of states; and
performing a call via the idle base unit.

10. A method according to claim 9 in which the plurality of base units includes a primary base unit and the call is performed via the primary base unit if it is idle.

11. A method according to claim 9 or claim 10 in which maintaining the table of states comprises:
setting a base unit to a busy state in the table upon receipt of a busy signal from the base unit; and
setting the base unit to an idle state in the table upon receipt of a call termination signal from the base unit.

12. A base unit for use in a cordless telephone system in which a first plurality of portable units may be registered, including at least one portable unit which is registered with a plurality of base units, the base unit comprising control means for sending a busy signal to the said at least one portable unit, upon detection of a call request signal or an off-hook signal in the base unit, and for performing a call.

13. The base unit according to claim 12 further comprising a memory for storing the IDs of portable units registered with said base unit.

14. A portable unit for use in a cordless telephone system which is adapted to be registered with a plurality of base units and comprises:
means for receiving from the plurality of base units with which the portable unit is registered respective control signals indicative of the communication state of the base units; and
control means for maintaining a table of the states of the said plurality of base units derived from the control signals, selecting an idle base unit on the basis of the table of states and performing a call via the idle base unit.

15. The portable unit according to claim 14 wherein said table of states identifies a primary and secondary base unit designated to said portable unit.

16. The portable unit according to claim 15 wherein each portable unit in the cordless telephone system has a different primary base unit.

## Patentansprüche

1. Verfahren zum Betreiben einer Basisstation in einem schnurlosen Telefonsystem mit einer Basisstation, bei der eine erste Mehrheit von mobilen Handgeräten registriert ist, einschließlich wenigstens eines mobilen Handgerätes, das bei einer Mehrheit von Basisstationen registriert ist, wobei das Verfahren das Senden eines Besetztsignals an das genannte wenigstens eine mobile Handgerät nach dem Erfassen eines Rufanforderungssignals oder eines Hörer-abgehoben-Signals in der Basisstation und das Durchführen eines Anrufs umfasst.

2. Verfahren nach Anspruch 1, das ferner Folgendes umfasst:
nach dem Erfassen des genannten Hörer-abgehoben-Signals oder Rufanforderungssignals in der Basisstation, das Lesen der ID von wenigstens einem mobilen Handgerät aus einem Speicher der genannten Basisstation; und
Senden des genannten Besetztsignals an wenigstens ein entsprechendes mobiles Handgerät.

3. Verfahren nach Anspruch 1, bei dem die erste Mehrheit von mobilen Handgeräten eine zweite Mehrheit von mobilen Handgeräten umfasst, die bei einer Mehrheit von Basisstationen registriert sind, und wobei das Verfahren das Senden des Besetztsignals an jedes aus der genannten zweiten Mehrheit von mobilen Handgeräten umfasst.

4. Verfahren nach Anspruch 3, das ferner das Senden eines Rufbeendigungssignals an jedes aus der zweiten Mehrheit von mobilen Handgeräten umfasst, wenn der Anruf an der Basisstation beendet wird.

5. Verfahren nach Anspruch 3 oder Anspruch 4, wobei das Besetztsignal und/oder das Rufbeendigungssignal an jedes aus der ersten Mehrheit von mobilen Handgeräten gesendet wird/werden.

6. Verfahren nach Anspruch 1, bei dem die erste Mehrheit von mobilen Handgeräten eine zweite Mehrheit von mobilen Handgeräten umfasst, die bei einer Mehrheit von Basisstationen registriert sind, wobei das Rufanforderungssignal von einem aus der zweiten Mehrheit von mobilen Handgeräten empfangen wird und das Verfahren das Senden des Besetztsignals an alle übrigen aus der zweiten Mehrheit von mobilen Handgeräten und das Durchführen des Anrufs mit dem genannten einen aus der zweiten Mehrheit von mobilen Handgeräten umfasst.

7. Verfahren nach Anspruch 6, das ferner das Senden eines Rufbeendigungssignals an alle übrigen aus der zweiten Mehrheit von mobilen Handgeräten umfasst, wenn der Anruf an der Basisstation beendet wird.

8. Verfahren nach Anspruch 6 oder Anspruch 7, wobei das Besetztsignal und/oder das Rufbeendigungssignal an jedes aus der ersten Mehrheit von mobilen Handgeräten mit Ausnahme des genannten einen aus der zweiten Mehrheit von mobilen Handgeräten gesendet wird/werden.

9. Verfahren zum Betreiben eines mobilen Handgerätes in einem schnurlosen Telefonsystem, wobei das mobile Handgerät bei einer Mehrheit von Basisstationen registriert ist, das Folgendes umfasst:
Empfangen jeweiliger Steuersignale, die den Kommunikationszustand der Basisstationen anzeigen, von der Mehrheit von Basisstationen, bei denen das Handgerät registriert ist;
Führen einer Tabelle der von den Steuersignalen abgeleiteten Zustände der genannten Mehrheit von Basisstationen;
Wählen einer freien Basisstation auf der Basis der Zustandstabelle; und
Durchführen eines Anrufs über die freie Basisstation.

10. Verfahren nach Anspruch 9, wobei die Mehrheit von Basisstationen eine primäre Basisstation beinhaltet und der Anruf über die primäre Basisstation durchgeführt wird, wenn sie frei ist.

11. Verfahren nach Anspruch 9 oder Anspruch 10, wobei das Führen der Zustandstabelle Folgendes umfasst:
Versetzen einer Basisstation in einen Besetztzustand in der Tabelle nach dem Empfang eines Besetztsignals von der Basisstation; und
Versetzen der Basisstation in einen freien Zustand in der Tabelle nach dem Empfang eines Rufbeendigungssignals von der Basisstation.

12. Basisstation zur Verwendung in einem schnurlosen Telefonsystem, bei dem eine erste Mehrheit von mobilen Handgeräten registriert werden kann, einschließlich wenigstens eines mobilen Handgerätes, das bei einer Mehrheit von Basisstationen registriert ist, wobei die Basisstation Steuermittel zum Senden eines Besetztsignals an das genannte wenigstens eine mobile Handgerät nach der Erkennung eines Rufanforderungssignals oder eines Hörer-abgehoben-Signals in der Basisstation und zum Durchführen eines Anrufs umfasst.

13. Basisstation nach Anspruch 12, die ferner einen Speicher zum Speichern der IDs bei der genannten Basisstation registrierten mobilen Handgeräten umfasst.

14. Mobiles Handgerät für die Verwendung in einem schnurlosen Telefonsystem, das zur Registrierung bei einer Mehrheit von Basisstationen angepasst ist, und Folgendes umfasst:
Mittel zum Empfangen jeweiliger Steuersignale, die den Kommunikationszustand der Basisstationen anzeigen, von der Mehrheit der Basisstationen, bei denen das mobile Handgerät registriert ist; und
Steuermittel zum Führen einer Tabelle der von den Steuersignalen abgeleiteten Zustände der genannten Mehrheit von Basisstationen, Wählen einer freien Basisstation auf der Basis der Zustandstabelle und Durchführen eines Anrufs über die freie Basisstation.

15. Mobiles Handgerät nach Anspruch 14, wobei die genannte Zustandstabelle eine primäre und eine sekundäre Basisstation identifiziert, die für das genannte mobiles Handgerät designiert sind.

16. Mobiles Handgerät nach Anspruch 15, wobei jedes mobile Handgerät in dem schnurlosen Telefonsystem eine andere primäre Basisstation hat.

## Revendications

1. Procédé servant à exploiter une unité de base dans un système téléphonique sans fil possédant une unité de base auprès de laquelle une première pluralité d'unités portables est enregistrée, y compris une unité portable au moins qui est enregistrée auprès d'une pluralité d'unités de base, le procédé comprenant l'action consistant à envoyer un signal d'occupation à ladite au moins une unité portable, lors de la détection d'un signal de demande d'appel ou d'un signal de décrochage dans l'unité de base, et à effectuer un appel.

2. Procédé, selon la revendication 1, comprenant en outre :
lors de la détection dudit signal de décrochage ou dudit signal de demande d'appel dans l'unité de base, lire l'identité d'une unité portable au moins à partir d'une mémoire dans ladite unité de base ; et
envoyer ledit signal d'occupation à une unité portable correspondante au moins.

3. Procédé, selon la revendication 1, dans lequel la première pluralité d'unités portables comprend une deuxième pluralité d'unités portables qui est enregistrée auprès d'une pluralité d'unités de base, et le procédé comprend l'action consistant à envoyer le signal d'occupation à chaque unité portable de la deuxième pluralité d'unités portables.

4. Procédé, selon la revendication 3, comprenant en outre l'action consistant à envoyer un signal de fin d'appel à chaque unité portable de la deuxième pluralité d'unités portables lorsque l'appel est terminé dans l'unité de base.

5. Procédé, selon la revendication 3 ou la revendication 4, dans lequel le signal d'occupation et/ou le signal de fin d'appel est envoyé, ou sont envoyés, à chaque unité portable de la première pluralité d'unités portables.

6. Procédé, selon la revendication 1, dans lequel la première pluralité d'unités portables comprend une deuxième pluralité d'unités portables qui est enregistrée auprès d'une pluralité d'unités de base, alors que le signal de demande d'appel est reçu à partir d'une unité portable de la deuxième pluralité d'unités portables, et le procédé comprend l'action consistant à envoyer le signal d'occupation à chaque unité portable du reste de la deuxième pluralité d'unités portables, et à effectuer l'appel avec ladite une unité portable de la deuxième pluralité d'unités portables.

7. Procédé, selon la revendication 6, comprenant en outre l'action consistant à envoyer un signal de fin d'appel à chaque unité portable du reste de la deuxième pluralité d'unités portables lorsque l'appel est terminé dans l'unité de base.

8. Procédé, selon la revendication 6 ou la revendication 7, dans lequel le signal d'occupation et/ou le signal de fin d'appel est envoyé, ou sont envoyés, à chaque unité portable de la première pluralité d'unités portables, à l'exception de ladite une unité portable de la deuxième pluralité d'unités portables.

9. Procédé servant à exploiter une unité portable dans un système téléphonique sans fil, dans lequel l'unité portable est enregistrée auprès d'une pluralité d'unités de base, comprenant :
l'action consistant à recevoir, à partir de la pluralité d'unités de base auprès desquelles l'unité portable est enregistrée, des signaux de commande respectifs, indiquant l'état de communication des unités de base ;
l'action consistant à maintenir une table des états de ladite pluralité d'unités de base qui est dérivée à partir des signaux de commande ;
l'action consistant à sélectionner une unité de base au repos en fonction de la table des états ; et
l'action consistant à effectuer un appel par l'intermédiaire de l'unité de base au repos.

10. Procédé, selon la revendication 9, dans lequel la pluralité des unités de base comporte une unité de base primaire, alors que l'appel est effectué par l'intermédiaire de l'unité de base primaire si celle-ci est au repos.

11. Procédé, selon la revendication 9 ou la revendication 10, dans lequel le maintien de la table des états comprend :
l'action consistant à régler une unité de base sur un état occupé dans la table, lorsque l'unité de base envoie un signal d'occupation ; et
l'action consistant à régler une unité de base sur un état au repos dans la table, lorsque l'unité de base envoie un signal de fin d'appel.

12. Unité de base destinée à être utilisée dans un système téléphonique sans fil, auprès de laquelle une première pluralité d'unités portables peut être enregistrée, y compris une unité portable au moins qui est enregistrée auprès d'une pluralité d'unités de base, l'unité de base comprenant un moyen de commande servant à envoyer un signal d'occupation à ladite au moins une unité portable, lors de la détection d'un signal de demande d'appel ou d'un signal de décrochage dans l'unité de base, et à effectuer un appel.

13. L'unité de base, selon la revendication 12, comprenant en outre une mémoire servant à stocker les identités des unités portables qui sont enregistrées auprès de ladite unité de base.

14. Unité portable destinée à être utilisée dans un système téléphonique sans fil, qui est adaptée pour être enregistrée auprès d'une pluralité d'unités de base et comprend :
un moyen servant à recevoir, à partir de la pluralité d'unités de base auprès desquelles l'unité portable est enregistrée, des signaux de commande respectifs, indiquant l'état de communication des unités de base ; et
un moyen de commande servant à maintenir une table des états de ladite pluralité d'unités de base qui est dérivée à partir des signaux de commande, à sélectionner une unité de base au repos en fonction de la table des états et à effectuer un appel par l'intermédiaire de l'unité de base au repos.

15. L'unité portable, selon la revendication 14, dans laquelle ladite table des états identifie une unité de base primaire et secondaire qui est affectée à ladite unité portable.

16. L'unité portable, selon la revendication 15, dans laquelle chaque unité portable présente dans le système téléphonique sans fil, possède une unité de base primaire différente.
